## Europäisches Patentamt
## European Patent Office
## Office européen des brevets

(19)

(11) Numéro de publication: **0 020 211**
**B1**

(12)

# FASCICULE DE BREVET EUROPEEN

(45) Date de publication du fascicule du brevet: **18.07.84**

(51) Int. Cl.³: **G 05 D 13/62,**
**G 11 B 15/52**

(21) Numéro de dépôt: **80400631.0**

(22) Date de dépôt: **09.05.80**

(54) **Dispositif d'asservissement de vitesse.**

(30) Priorité: **23.05.79 FR 7913211**

(43) Date de publication de la demande:
**10.12.80 Bulletin 80/25**

(45) Mention de la délivrance du brevet:
**18.07.84 Bulletin 84/29**

(84) Etats contractants désignés:
**AT CH DE GB IT LI**

(56) Documents cités:
**DE - A - 1 499 643**
**GB - A - 2 002 546**
**US - A - 3 137 767**

(73) Titulaire: **ENERTEC SOCIETE ANONYME**
**12, Place des Etats-Unis**
**F-92120 Montrouge (FR)**

(72) Inventeur: **Filippini, Fulvio**
**9 rue La Bruyère**
**F-78000 Versailles (FR)**

(74) Mandataire: **Bentz, Jean-Paul**
**GIERS SCHLUMBERGER Service BREVETS 12,**
**place des Etats-Unis**
**F-92124 Montrouge Cedex (FR)**

Courier Press, Leamington Spa, England.

# Description

L'invention concerne un dispositif d'asservissement de vitesse, notamment pour commander le déplacement d'un objet à une vitesse égale à une valeur de référence.

Un domaine d'application particulier de l'invention est celui des appareils d'entraînement d'une bande portant un enregistrement sonore, visuel ou les deux, la bande devant être entraînée à une vitesse définie par un signal polite. Le signal pilote peut être un signal extérieur de fréquence donnée. Lorsqu'il s'agit de synchroniser le défilement de deux bandes, notamment une bande-son et une bande-images, on utilise un signal représentatif de la vitesse d'une bande, par exemple la bande images, pour piloter le moteur d'entraînement de l'autre bande.

On connaît des dispositifs d'asservissement mécaniques utilisant un organe d'entraînement à picots pour la bande asservie, celle-ci étant régulièrement perforée. Ceci conduit toutefois à une usure rapide des perforations et à une avance irrégulière qui se traduit, dans le cas d'une bande-son, par des perturbations connues sous le nom de pleurage.

Pour éliminer les inconvénients liés à l'utilisation d'un organe à picots pour entraîner une bande, on a pensé à utiliser un système à cabestan lisse entraîné par un moteur électrique asservi.

Toutefois, même dans ce dernier cas, plusieurs difficultés peuvent se présenter.

En premier lieu, les asservissements de vitesse de rotation de moteur électrique utilisés présentent généralement une erreur statique non nulle, par exemple par suite de l'apparition d'un couple résistant sur l'arbre du moteur. L'erreur statique est la différence entre la vitesse de référence, ou consigne, et la vitesse d'équilibre atteinte après stabilisation de l'asservissement.

Ceci est le cas notamment des systèmes de l'art antérieur, dont le brevet GB 2 002 546 donne un exemple, dans lesquels la correction de vitesse du moteur n'est élaborée qu'à partir de l'information que constitue la mesure de l'écart entre la vitesse réelle et la vitesse souhaitée du moteur.

En second lieu, dans le cas de l'asservissement d'une bande-son à une vitesse correspondant à la fréquence d'un signal pilote, les systèmes connus sont généralement du type à verrouillage de phase entre le signal pilote et un signal représentatif de la vitesse réelle de la bande-son. Le verrouillage doit être assez strict pour obtenir la précision et la stabilité d'asservissement souhaitées. Il s'ensuit que les variations légères mais brusques de fréquence du signal pilote, en général constitué d'une succession d'impulsions, sont répercutées sur l'entraînement de la bande-son et donnent naissance à un pleurage audible lorsque leur amplitude dépasse un certain seuil.

Dans ce contexte, le brevet allemand DE 1 499 643 propose, en vue d'obtenir une meilleure précision de l'asservissement, un système dans lequel sont utilisés deux signaux de mesure de vitesse de bande ayant des fréquences propres différentes. Cependant, outre le fait que ce système entraîne une augmentation du nombre de capteurs de vitesse, la nécessité de disposer, pour son fonctionnement, de deux signaux de vitesse de bande différents, le limite à des applications spécifiques, telles que l'enregistrement magnétique d'images.

Aussi, l'invention a pour objet, selon l'un de ses aspects, de réaliser un asservissement de la vitesse de rotation d'un moteur électrique à erreur statique nulle au moyen d'un dispositif du type comportant un circuit d'alimentation du moteur en courant électrique, un capteur délivrant un signal de mesure représentatif de la vitesse de rotation réelle du moteur et un circuit de commande recevant le signal de mesure et délivrant un signal de commande au circuit d'alimentation pour asservir la vitesse de rotation du moteur à une valeur de consigne prédéterminée.

Ceci est obtenu par un dispositif d'asservissement dans lequel, conformément à l'invention, le circuit de commande comporte: un générateur de fonction recevant le signal de mesure de fréquence proportionnelle à la vitesse réelle de rotation du moteur et élaborant une valeur de commande EN répondant à la fonction EN=CN+f (vm), f (vm) étant une fonction f de la vitesse réelle vm de rotation du moteur et CN une valeur de prépositionnement; et des moyens de calcul de la valeur CN branchés à la sortie du générateur de fonction pour calculer CN=EN−f (VM), VM étant la valeur de consigne de la vitesse de rotation de moteur, le circuit d'alimentation du moteur recevant un signal de commande représentatif de EN et le générateur de fonction étant constitué par un additionneur recevant la valeur de préchargement et y additionnant une quantité représentative de la période du signal de mesure.

Lorsque la boucle d'asservissement est équilibrée, la valeur EN qui détermine le courant fourni au moteur ne varie plus. On a alors nécessairement vm=VM, puisque la fonction f est univoque. Cette égalité est vérifiée quel que soit le couple résistant qui peut apparaître sur l'arbre du moteur, dans la limite bien sûr des possibilités qu'a le moteur de vaincre ce couple résistant.

En d'autres termes, il est réalisée un régulation du couple moteur pour contrôler la vitesse du moteur.

L'invention a encore pour objet, selon un autre de ses aspects, de réaliser un asservissement à une vitesse de référence de la vitesse de défilement d'une bande, sans répercussions des variations notables à fréquence élevée de la vitesse de référence, au moyen d'un dispositif du type comportant un capteur fournissant un signal de mesure représentant la vitesse de défilement réelle instantanée de la bande, une boucle d'asservissement recevant le signal de mesure et un signal pilote et délivrant une information de consigne à un circuit de commande d'un organe moteur d'entraînement de la bande pour faire défiler celle-ci à une vitesse de référence représentée par le signal pilote.

Ceci est obtenu par un dispositif d'asservissement dans lequel, conformément à l'invention, la boucle d'asservissement comporte des moyens de comparaison recevant le signal de mesure et le signal pilote et délivrant une information d'erreur représentative de l'écart ente les vitesses réelle et de référence de la bande, et des moyens correcteurs modifiant l'information de consigne en fonction de l'information d'erreur, le taux de variation de l'information de consigne ayant une valeur maximale limitée en valeur absolue.

Par taux de variation de l'information de consigne IC, on entend ici les valeurs (positives ou négatives) de $\Delta IC/\Delta t$, IC représentant la variation de IC pendant l'intervalle de temps $\Delta t$.

En d'autres termes, lorsque la correction de IC a lieu de façon continue, le cas échéant, cette correction est réalisée de manière que la dérivée de IC par rapport au temps soit en valeur absolue limitée.

Ceci signifie que la vitesse de variation de IC est fonction de l'amplitude de l'information d'erreur tant que celle-ci ne dépasse pas en valeur absolue un seuil déterminé auquel cas la vitesse de variation de IC reste en valeur absolue plafonnée à une valeur maximale.

Lorsque la correction de IC a lieu, le cas échéant, à intervalles de temps réguliers, par incréments positifs ou négatifs, la valeur absolue maximale des incréments est limitée.

Cette correction peut alors être, le cas échéant, effectuée de deux façons. On peut modifier IC d'une quantité positive ou négative de valeur absolue prédéterminée fixe correspondant à la limite maximale de variation de IC en fonction simplement du signe de l'information d'erreur.

Selon un autre mode de réalisation, IC est modifiée, à chaque fois qu'il est besoin, d'une quantité positive ou négative dont la valeur absolue dépend de l'amplitude de l'information d'erreur tant que celle-ci ne dépasse pas en valeur absolue un seuil déterminé, auquel cas cette quantité reste en valeur absolue plafonnée à sa limite maximale.

La limitation de la variation dans le temps de l'information de consigne permet de ne pas répercuter sur la bande des variations importantes et brusques de la vitesse de référence, le rattrapage se faisant progressivement. On réalise donc un asservissement de vitesse moyenne avec découplage aux fréquences élevées de variation de la vitesse de référence.

On notera encore qui l'on ne réalise pas un asservissement à verrouillage de phase entre le signal pilote et celui fourni par le capteur de vitesse de défilement de la bande asservie. En effet, l'information d'erreur n'est pas fonction d'une différence de position, mais d'une différence de vitesse.

Lorsque la bande dont la vitesse de défilement est asservie porte un enregistrement de sons, la limite de la variation en valeur absolue de l'information de consigne est choisie pour correspondre à une limite prédéterminée en valeur absolue des taux de variation de la vitesse de défilement de la bande. Cette limite de vitesse de variation de la vitesse de défilement de la bande est déterminée pour ne pas provoquer de pleurage audible. Elle est choisie de préférence égale à environ 1 % de la vitesse de référence.

L'invention sera mieux comprise à la lecture de la description d'un mode particulier de réalisation, description faite ci-après à titre indicatif mais non limitatif en référence aux dessins annexés dans lesquels:

— la figure 1 est une vue schématique d'ensemble d'un mode de réalisation d'un asservissement de vitesse conformément à l'invention,
— la figure 2 est un diagramme temporel de signaux produits en différents niveaux du dispositif représenté par la figure 1, et
— les figures 3 à 6 sont des organigrammes illustrant différentes opérations effectuées au cours du fonctionnement du dispositif représenté par la figure 1.

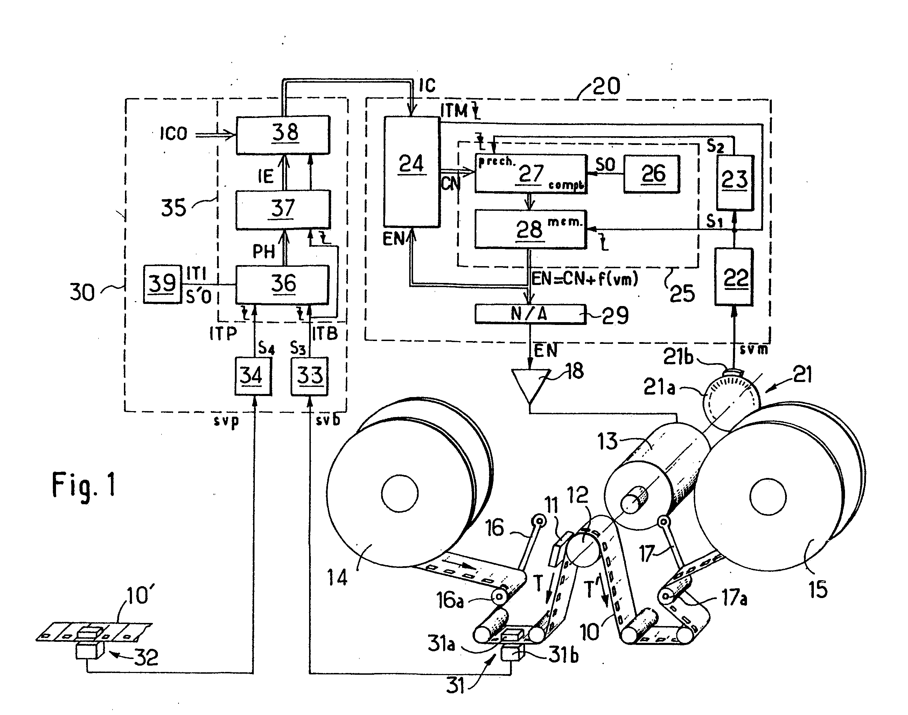

Sur la figure 1, la référence 10 désigne une bande magnétique perforée portant un enregistrement de sons et entraînée par passage sur un cabestan lisse 12 mû par un moteur électrique 13 à courant continu.

La bande 10 provient d'une bobine débitrice 14 et est rembobinée sur une bobine réceptrice 15. Entre chacune des bobines 14 et 15 et le cabestan 12, la bande passe sur des galets montés aux extrémités de bras de tension 16 et 17. Les bras 16 et 17 sont soumis à une force de rappel pour tendre la bande sur son trajet entre les galets 16a et 17a portés par ces bras.

Les bobines 14 et 15 sont entraînées au moyen de moteurs électriques asservis (non représentés). L'asservissement de ces moteurs est réalisé par des circuits analogiques bien connus qui ne rentrent pas dans le cadre de la présente invention.

Dans le cas présent, cet asservissement est de préférence réalisé de manière à maintenir les bras dans des positions sensiblement fixes pour lesquelles les tensions T et T' exercées sur la bande de part et d'autre du cabestan induisent sur celui-ci un couple inertiel sensiblement nul. Comme on peut le voir sur la figure 1, ceci est obtenu du fait que les trajets de la bande 10 de chaque côté du cabestan 12 sont orientés symétriquement par rapport au plan diamètral

contenant l'axe du cabestan et la ligne de contact de la bande sur celui-ci.

Au démarrage, le moteur 13 n'a donc normalement qu'un faible couple inertiel à vaincre, ce qui permet d'amener très rapidement la bande 10 à la vitesse souhaitée. On notera encore que la bande est rentraînée simplement par adhérence sur le cabestan lisse, à l'exclusion de galet presseur ou de picots pouvant la détériorer et augmenter l'inertie du système.

Sur la portion du trajet où elle est tendue, la bande 10 passe devant une tête de lecture 11 et devant un capteur 31 qui délivre un signal svb représentatif de la vitesse de défilement réelle de la bande.

Un deuxième capteur 21 est placé sur l'arbre du moteur et délivre un signal svm représentatif de la vitesse de rotation réelle vm du moteur 13.

Le moteur à courant continue 13 est alimenté en courant continu par un amplificateur 18 qui reçoit un signal de commande $V_{EN}$. En pratique, ce signal détermine donc le couple fourni par le moteur. Pour une vitesse donnée vm, si le couple résistant varie, le couple moteur doit varier de façon à le compenser.

L'asservissement du moteur 13 est réalisé au moyen d'une première boucle 20 recevant le signal svm et une information IC de consigne de vitesse de rotation, et délivrant le signal de commande $V_{EN}$, et d'une deuxième boucle 30 recevant le signal svb et un signal pilote svp, et déterminant l'information de consigne IC pour que la bande soit entraînée par le moteur 13 à la vitesse de défilement définie par le signal pilote.

On décrira en premier lieu la boucle 20 qui réalise un asservissement de la vitesse réelle de rotation vm du moteur 13 à erreur statique nulle pour faire tourner celui-ci à une vitesse de consigne VM déterminée par IC.

Le signal svm a une fréquence fm représentative de la vitesse vm, par exemple proportionnelle à vm: fm=kvm (k étant une constante). Le capteur 21 est par exemple constitué par un disque optique 21*a* solidaire en rotation de l'arbre du moteur 13 et portant des repères réfléchissants (ou transparents) répartis angulairement de façon uniforme. Ces repères réfléchissent (ou transmettent) la lumière issue d'une source sur un détecteur 21*b* à composant photosensible qui produit une impulsion à chaque passage d'un repère. Un tel disque peut comporter par exemple 1200 repères, ce qui fournit une fréquence du signal de sortie svm de 2000 Hz à une vitesse nominale de défilement de bande correspondant à une cadence de 25 images par seconde pour une bande-images. Un tel capteur est parfaitement connu en soi. Il en existe d'autres types.

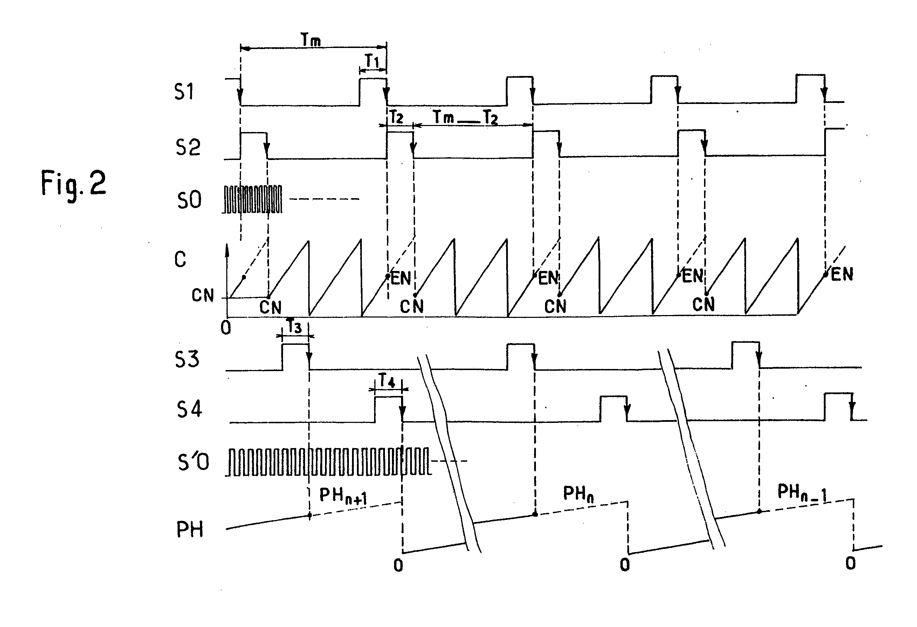

Une bascule monostable 22 reçoit les impulsions svm pour les mettre en forme et délivre des impulsions S1 (Figure 2) de durée T1 (par exemple 1 microseconde) notablement inférieure à la période Tm des impulsions svm (Tm=1/fm).

La boucle 20 comporte un organe de calcul 24 et un générateur de fonction 25.

L'organe de calcul 24 délivre sous forme numérique une information de préchargement CN au générateur de fonction 25 qui élabore sous forme numérique la quantité EN=CN+f (vm). Cette quantité EN est l'information de commande qui, convertie sous forme analogique par un convertisseur 29 produit le signal de commande $V_{EN}$.

La fonction f (vm) est une fonction univoque et monotone de la vitesse vm.

Le générateur de fonction 25 comporte une horloge 26, un compteur à préchargement 27 et une mémoire 28. Une bascule monostable 23 est déclenchée par les fronts arrière des impulsions S1 et délivre des impulsions S2 (Figure 2) de durée T2 elle aussi notablement inférieure à la période Tm.

Chaque front arrière d'une impulsion S2 commande le préchargement de la quantité CN dans le compteur 27 et le comptage des impulsions SO (Figure 2) fournies par l'horloge 26 à une fréquence FO très supérieure à fm (par exemple 18 MHz) se poursuit à partir de la valeur CN préchargée.

Le comptage se poursuit avec, éventuellement, un ou plusieurs retours à zéro du compteur lorsque sa capacité maximale est dépassée.

La variation du contenu C du compteur dans le temps peut être représentée par une rampe, ou, éventuellement, des dents de scie (Figure 2).

Chaque front arrière d'une impulsion S1 provoque la mémorisation dans la mémoire du contenu instantané du compteur, ce qui fournit la quantité

$$EN = CN + \frac{FO}{fm} - A,$$

A étant une quantité constante connue.

L'organe de calcul 24 détermine CN pour que le moteur tourne à la vitesse VM. Pour ce faire, l'organe de calcul effectue l'opération CN=EN—IC sous la commande de chaque impulsion S1. Ainsi, chaque valeur EN est prise en compte par l'organe de calcul 24 dès qu'elle est mémorisée pour évaluer la quantité CN avant le début du cycle de comptage suivant, cycle qui démarre un temps T2 après.

Le calcul de CN=EN—IC peut être réalisé sans difficulté en logique câblée, en utilisant un circuit soustracteur et un registre pour CN.

Le calcul peut aussi être effectué au moyen d'un microprocesseur comme décrit plus loin.

Dans le cas du générateur de fonction envisagé plus haut, on confère à IC la valeur

$$IC = \frac{FO}{FM} - A \qquad (1)$$

FM étant la valeur de la fréquence fm lorsque le moteur tourne à la vitesse VM désirée.

Le fonctionnement de l'asservissement est le suivant:

si la vitesse vm devient inférieure (supérieure) à VM, la fréquence fm diminue (croît) et la valeur EN croît (diminue). Le moteur reçoit alors plus (moins) de courant et sa vitesse croît (décroît). En particulier, si un couple résistant apparaît (par exemple frottement accidentel sur le cabestan), le moteur 13 va recevoir le courant nécessaire pour vaincre ce couple et un nouvel équilibre est attent, avec un couple moteur différent mais avec une vitesse inchangée.

On a vu plus haut que le montage de la bande sur le cabestan peut être réalisée de manière qui le couple inertiel sur le cabestan soit pratiquement nul. Dans le cas où le compteur 27 a une capacité limitée, en particulier s'il revient une ou plusieurs fois à zéro au cours de chaque cycle de comptage, il est préférable de choisir les paramètres de l'asservissement (K, FO, T2 notamment) pour qu'à la vitesse nominale VM la valeur EN corresponde sensiblement à la moitié, ou même un peu moins, de la capacité du compteur 27. On autorise ainsi une augmentation de la valeur EN dans le cas où, par exemple, le couple du moteur doit être augmenté pour vaincre un couple résistant subit et on offre des possibilités d'asservissement dans une plage de vitesses assez étendue de part et d'autre de la vitesse nominale.

La précision de l'asservissement est liée à l'erreur absolue sur la détermination de EN. Pour un asservissement à une vitesse VM correspondant à une fréquence FM, la précision est donnée par FM/FO.

On décrira maintenant la seconde boucle d'asservissement 30 dont l'objet est de déterminer l'information de consigne IC pour que la bande 10 défile à une vitesse de référence déterminée par le signal pilote svp.

Le signal svb a une fréquence fb représentative de la vitesse de défilement réelle vb de la bande 10, par exemple une fréquence proportionnelle à vb: fb=K.vb (K étant une constante). Le capteur 31 est par exemple constitué par une source lumineuse 31$a$ et un récepteur photosensible 31 $b$ situés de part et d'autre du trajet de perforations régulièrement espacées le long de la bande 10. D'autres repères pourraient être utilisés, par exemple des enregistrements portés par la bande et détectés par des moyens de lecture appropriés. On peut aussi utiliser le défilement de la bande ellemême pour entraîner une roue avec ou sans picots dont la rotation fournit le signal svb recherché, ou tout autre capteur défilement de la bande.

Le signal pilote svp peut être un signal de synchronisation fourni par une source extérieure ou un signal de référence représentant la vitesse de défilement d'une bande à laquelle on veut asservir la vitesse de défilement de la bande 10.

Dans l'exemple illustré, le sighal svp est produit par un capteur 32 analogue au capteur 31 et délivrant un signal de fréquence fp proportionnelle à la vitesse vp de défilement d'une bande 10' perforée porteuse d'images. Les rapports de proportionnalité entre fb et vb et entre fp et vp sont égaux à K, le nombre K pouvant par exemple être égal à 1 si les vitesses vb et vp sont exprimées en images/seconde.

Les impulsions des signaux svb et svp sont mises en forme au moyen de bascules monostables 33, 34 qui délivrent des impulsions S3, S4 (Figure 2) de durées T3, T4 et de fréquences fb et fp, à un circuit 35 qui élabore une information d'erreur IE représentative de la différence entre les vitesses vb et vp et qui détermine la valeur de consigne IC en fonction d'une valeur initiale de consigne ICO et des valeurs successives de l'information d'erreur.

L'information IE est ici élaborée par mesure de la variation dans le temps du déphasage PH entre les signaux svb et svp et les taux de variation

$$\frac{\Delta IC}{\Delta t}$$

sont déterminés en fonction de la valeur mesurée de IE.

Sur la Figure 1, le circuit 35 est représenté comme étant constitué de trois blocs fonctionnels: un compteur 36, un premier organe de calcul numérique 37 recevant le contenu du compteur 36 et élaborant la valeur IE et un second organe de calcul numérique 38 recevant la valeur IE et élaborant la valeur IC.

Entre un front arrière d'une impulsion S4 et le front arrière suivant d'une impulsion S3, le compteur 36 compte les impulsions S'O de fréquence F'O fournies par une horloge 39. La fréquence F'O est choisie nettement supérieure à fp, par exemple 2000 Hz.

A chaque front arrière d'une impulsion S3, le compteur 36 contient un nombre PH (Figure 2) représentant le déphasage entre svb et svp.

L'organe de calcul 37 élabore, sous la commande des impulsions S3, la quantité IE=$\Delta$PHn représentant la différence entre le $n^{ème}$ nombre (PHn) et le $n-1^{ème}$ nombre PH (PHn—1) fournis par le compteur 36.

A chaque fin de calcul de $\Delta$PHn, l'organe de calcul 38 effectue l'opération IC=IC+$\Delta$ICn, c'est à dire corrige la valeur IC existante d'une quantité $\Delta$ICn si la quantité $\Delta$PHn calculée n'est pas nulle. A titre indicatif, dans l'exemple décrit, cette opération est effectuée pour chaque image, c'est à dire à une cadence nominale de 25 fois par seconde. La précision en valeur absolue sur $\Delta$PHn est donnée par la période des impulsions S'O.

Le signe de $\Delta$ICn dépend de celui de $\Delta$PHn. Dans le cas de l'exemple illustré, ces signes sont opposés pour qu'une augmentation du déphasage entre svb et svp (ce qui traduit une accélération de la bande 10') se traduise par une diminution de IC, donc une augmentation de FM et de la vitesse de consigne VM (voir équation 1).

La valeur absolue de $\Delta ICn$ est constante et prédéterminée à une valeur $\Delta IC$ max qui correspond sensiblement au maximum de variation de vitesse de la bande 10 qui soit tolérable pour ne pas engendrer de pleurage audible. A titre indicatif, lorsque le signal sp est fourni par détection des perforations d'une bande images qui défile à une cadence de 25 images par seconde, on admet que le maximum de variation de vitesse de la bande son correspond à un rattrapage d'une image toutes les quatre secondes, soit une vitesse de rattrapage au maximum égale à environ 1 % de la vitesse de référence de la bande-images.

A titre de variante, on peut choisir parmi plusieurs valeurs discrètes de $|\Delta ICn|$, ou calculer la valeur absolue $|\Delta ICn|$, en fonction de l'amplitude de l'information d'erreur tant que cette amplitude reste en valeur absolue inférieure ou égale à une valeur de seuil pour laquelle la valeur correspondante de $|\Delta ICn|$ est $\Delta IC$ max. Au delà de ce seuil, la variation de IC est plafonnée à la valeur $\Delta IC$ max et le rattrapage se fait progressivement.

Le circuit 35 peut être réalisé en logique câblée. Les organes de calcul 37 et 38 peuvent alors être constitués de circuits additionneurs algébriques associés notamment à des registres pour PH, IE, IC et $\Delta IC$ max.

Selon un autre mode de réalisation, les fonctions réalisées par le compteur 36, l'organe de calcul 37 et l'organe de calcul 38 sont exécutées au moyen d'une unité de traitement microprogrammée (microprocesseur), de même que la fonction réalisée par l'organe de calcul 24, la représentation de ces éléments fonctionnels sur la Figure 1 ayant alors pour objet de faciliter la compréhension du fonctionnement.

Les fonctions évoquées ci-dessus sont exécutées à la suite d'interruptions ITB, ITM, ITP et ITI du programme principal déclenchées respectivement par les impulsions S3, S1, S2 et S'0.

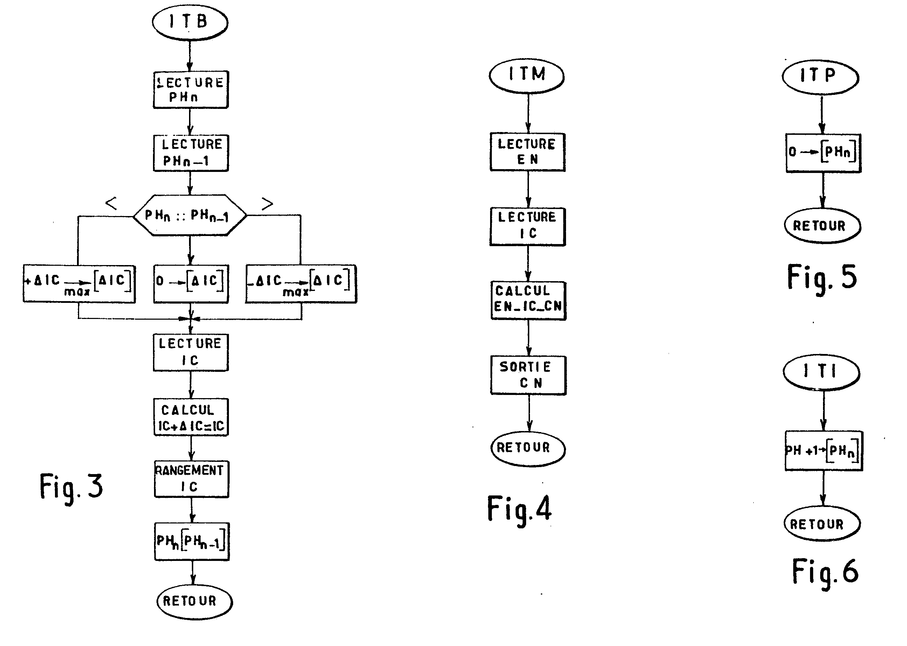

L'interruption ITB provoque le calcul de IE et la correction de IC par les opérations suivantes (Figure 3):

— lecture de PHn—1 dans un registre [PHn—1]
— lecture de PHn dans un registre [PHn]
— comparaison de PHn avec PHn—1 et écriture de +$\Delta IC$max,

0, ou —$\Delta IC$max dans un registre [$\Delta IC$] selon que $\Delta$PHn est négatif, nul ou positif,

— lecture de IC dans un registre [IC]
— calcul de IC+$\Delta IC$
— rangement du résultat de IC+$\Delta IC$ dans [IC]
— chargement du PHn dans [PHn—1], et
— retour.

L'interruption ITM provoque le calcul de CN par les opérations suivantes:

— lecture de EN dans la mémoire 28
— lecture de IC dans le registre [IC]
— calcul de EN—IC=CN
— sortie de la valeur de préchargement CN, et
— retour.

L'interruption ITP commande simplement la mise à zéro du contenu du registre [PHn] avant le retour au programme principal.

L'interruption ITI commande simplement l'incrémentation d'une unité du contenu du registre [PHn] avant le retour au programme principal.

On notera encore qu'au démarrage de l'asservissement (temps t=0), on charge dans le registre [IC] une valeur initiale ICO déterminée en fonction de la valeur estimée ou supposée de la vitesse de référence.

Par l'action des boucles 20 et 30, on maintient un déphasage constant quelconque entre les signaux svb et svp et non pas un verrouillage de phase prédéterminé entre ces signaux.

Dans le cas où la bande 10 est une bande-son à synchroniser sur une bande-images 10', le démarrage de l'asservissement se fait après positionnement initial relatif des deux bandes.

Le positionnement relatif peut se faire, comme connu en soi, au moyen d'un compteur différentiel recevant des informations de comptage donnant la position instantanée de chaque bande à partir d'un point origine. Ce positionnement ne rentre pas dans le cadre de l'invention.

L'asservissement au moyen de la boucle 30 n'a pas pour objet de maintenir les bandes dans une position relative regoureusement prédéterminée, mais d'asservir la vitesse de la bande 10 à celle de la bande 10', l'asservissement se faisant avec découplage aux hautes fréquences de variation de la vitesse de la bande 10'.

Bien entendu, diverses modifications ou adjonctions pourront être apportées au mode de réalisation décrit ci-dessus d'un asservissement de vitesse conforme à l'invention sans pour cela sortir du cadre de protection défini par les revendications annexées.

## Revendications

1. Dispositif d'asservissement de la vitesse de rotation d'un moteur électrique comportant un circuit (18) d'alimentation du moteur en courant électrique, un capteur (21) délivrant un signal de mesure (svm) représentatif de la vitesse de rotation réelle du moteur (vm) et un circuit de commande (20) recevant le signal de mesure (svm) et délivrant un signal de commande (EN) au circuit d'alimentation pour asservir la vitesse de rotation du moteur à une valeur de consigne (VM) prédéterminée, ce signal de commande étant fonction du nombre d'impulsions délivrées par une horloge pendant des durées inversement proportionnelles à la vitesse réelle du moteur, dispositif caractérisé en ce que le circuit de commande comporte:

— un générateur de fonction (25) recevant le signal de mesure et élaborant une valeur de commande EN répondant à la fonction EN=CN+f (vm), f (vm) étant une fonction f de la vitesse réelle vm de rotation du moteur et CN une valeur de prépositionnement précédemment mise en mémoire, et
— des moyens de calcul (24) délivrant à leur sortie une valeur réactualisée de la valeur CN en mémoire, ces moyens étant branchés à la sortie du générateur de fonction et propres à calculer CN=EN—f (VM), EN étant la valeur de commande précédemment élaborée et VM la valeur de consigne de la vitesse de rotation du moteur,

ledit générateur de fonction (25) comprenant essentiellement un compteur à préchargement (27) dont l'entrée de préchargement est reliée à la sortie desdits moyens de calcul (24), dont l'entrée de comptage est reliée à la sortie de ladite horloge (26) et dont l'entrée de commande de comptage reçoit des signaux de commande de comptage produits à partir du signal de mesure (svm) dont la fréquence (fm) est proportionnelle à la vitesse réelle du moteur.

2. Dispositif d'asservissement selon la revendication 1, caractérisé en ce que le contenu du compteur est transféré dans une mémoire (28) sous la commande de signaux de mémorisation produits à partir du signal de mesure.

3. Dispositif d'asservissement suivant l'une quelconque des revendications 1 à 2, dans lequel ledit moteur électrique entraîne une bande, ce dispositif comportant un capteur (31) fournissant un second signal de mesure (svb) représentant la vitesse de défilement réelle instantanée de la bande, une boucle d'asservissement (30) recevant le second signal de mesure (svb) et un signal pilote (svp), et délivrant audit circuit de commande (20) une information de consigne (IC) pour faire défiler la bande à une vitesse de référence représentée par le signal pilote (svp), caractérisé en ce que la boucle d'asservissement (30) comporte: des moyens de comparaison (36, 37) recevant le signal de mesure et le signal pilote et délivrant une information d'erreur (IE) représentative de l'écart entre les vitesses réelle et de référence de la bande, et des moyens correcteurs (38) modifiant l'information de consigne (IC) zn fonction de l'information d'erreur, le taux de variation de l'information de consigne ayant une valeur maximale limitée en valeur absolue.

4. Dispositif d'asservissement selon la revendication 3, caractérisé en ce que l'information de consigne est par intermittence modifiée, le cas échéant, en fonction de l'information d'erreur, d'une quantité (ΔICn) ne dépassant pas en valeur absolue une valeur maximale prédéterminée.

5. Dispositif d'asservissement selon l'une quelconque des revendications 3 et 4, caractérisé en ce que les moyens correcteurs modifient l'information de consigne en fonction uniquement du signe de l'information d'erreur (IE).

6. Dispositif d'asservissement selon l'une quelconque des revendications 3 et 4, caractérisé en ce que les moyens correcteurs modifient l'information de consigne en fonction du signe et de la valeur absolue de l'information d'erreur.

7. Dispositif d'asservissement selon l'une quelconque des revendications 3 à 6, caractérisé en ce que la valeur maximale du taux de variation de l'information de consigne est déterminée de manière à commander un rattrapage de la vitesse réelle de la bande à une vitesse au maximum égale à environ 1% de la vitesse de référence.

8. Dispositif d'asservissement selon l'une quelconque des revendications 3 à 7, caractérisé en ce que l'information de consigne est modifiée le cas échéant, en fonction de l'information d'erreur, d'une quantité de valeur absolue fixe prédéterminée.

9. Dispositif d'asservissement selon l'une quelconque des revendications 3 à 8, dans lequel le second signal de mesure a une fréquence (fb) liée à la vitesse de défilement réelle de la bande et le signal pilote (fp) a une fréquence liée de la même façon à la vitesse de référence, caractérisé en ce que les moyens de comparaison délivrent une information d'erreur représentant la variation dans le temps du déphasage (PH) entre le signal de mesure et le signal pilote.

10. Dispositif d'asservissement selon l'une quelconque des revendications 3 à 9, dans lequel les moyens de comparaison et les moyens correcteurs sont constitués par une unité de traitement numérique.

**Patentansprüche**

1. Vorrichtung zur Regelung der Rotationsgeschwindigkeit eines Elektromotors, mit einer Stromversorgungsschaltung (18) für den Motor, einem Meßwertaufnehmer (21), der ein Meßsignal (svm) abgibt, welches die Ist-Rotationsgeschwindigkeit des Motors (vm) darstellt, und mit einer Steuerschaltung (20), welche das Meßsignal (svm) empfängt und ein Steuersignal (EN) an die Stromversorgungsschaltung abgibt, um die Rotationsgeschwindigkeit des Motors einem vorbestimmten Sollwert (VM) nachzuregeln, wobei dieses Steuersignal abhängt von der Anzahl von Impulsen, die von einem Taktgeber während Dauern abgegeben werden, die umgekehrt proportional zur Istgeschwindigkeit des Motors sind, wobei die Vorrichtung dadurch gekennzeichnet ist, daß die Steuerschaltung umfaßt:

— einen Funktionsgenerator (25), der das Meßsignal empfängt und einen Steuerwert EN erzeugt, welcher die Funktion EN=CN+f (vm) erfüllt, worin f (vm) eine Funktion f der Istgeschwindigkeit vm der Drehung des Motors und CN ein Voreinstellwert ist, der zuvor eingespeichert wurde, und

— Rechenmittel (24), die an ihrem Ausgang einen aufgefrischten Wert des gespeicherten Wertes CN abgeben, wobei diese Mittel an den Ausgang des Funktionsgenerators angeschlossen sind und geeignet sind zur Berechnung von CN=EN−f (VM), worin EN des zuvor erzeugte Steuerwert und VM der Sollwert der Rotationsgeschwindigkeit des Motors ist,

wobei der Funktionsgenerator (25) im wesent-lichen einen vorladbaren Zähler (27) umfaßt, dessen Vorladeeingang mit dem Ausgang der Rechenmittel (24) verbunden ist, dessen Zähleingang mit dem Ausgang des Taktgebers (26) verbunden ist und dessen Zahlsteuereingang Zählsteuersignale empfängt, welche aus dem Meßsignal (svm) erzeugt werden, dessen Frequenz (fm) proportional zur Istgeschwindigkeit des Motors ist.

2. Regelvorrichtung nach Anspruch 1, dadurch gekennzeichnet, daß der Inhalt des Zählers in einen Speicher (28) unter Steuerung durch Speichersignale überführt wird, die aus dem Meßsignal erzeugt werden.

3. Regelvorrichtung nach einem der Ansprüche 1 und 2, bei welcher der Elektromotor ein Band antreibt, wobei diese Vorrichtung einen Meßwertaufnehmer (31) umfaßt, der ein zweites Meßsignal (svb) liefert, welches die augenblickliche Ist-Vorbeilaufgeschwindigkeit des Bandes darstellt, und wobei eine Regelschleife (30) das zweite Meßsignal (svb) und ein Pilotsignal (svp) empfängt und an die Steuerschaltung (20) eine Sollwertinformation (IC) abgibt, um das Band mit einer Referenzgeschwindigkeit vorbeilaufen zu lassen, die durch das Pilotsignal (svp) dargestellt ist, dadurch gekennzeichnet, daß die Regelschleife (30) umfaßt: Vergleichermittel (36, 37), welche das Meßsignal und das Pilotsignal empfangen und eine Fehlerinformation (IE) abgeben, welche die Abweichung zwischen der Istgeschwindigkeit und der Referenzgeschwindigkeit des Bandes darstellt, und Korrekturmittel (38), welche die Sollwertinformation (IC) in Abhängigkeit von der Fehlerinformation verändern, wobei die Größe der Sollwertinformationsänderung einen Maximalwert aufweist, dessen Absolutwert begrenzt ist.

4. Regelvorrichtung nach Anspruch 3, dadurch gekennzeichnet, daß die Sollwert-information gegebenenfalls und in Abhängig-keit von der Fehlerinformation intermittierend verändert wird um eine Größe (ΔICn), deren Absolutwert einen vorbestimmten maximalen Wert nicht überschreitet.

5. Regelvorrichtung nach Anspruch 3 oder 4, dadurch gekennzeichnet, daß die Korrekturmittel die Sollwertinformation allein in Abhängigkeit von dem Vorzeichen der Fehler-information (IE) verändern.

6. Regelvorrichtung nach einem der Ansprüche 3 und 4, dadurch gekennzeichnet, daß die Korrekturmittel die Sollwertinformation in Abhängigkeit von dem Vorzeichen und von dem Absolutwert der Fehlerinformation verändern.

7. Regelvorrichtung nach einem der Ansprüche 3 bis 6, dadurch gekennzeichnet, daß der maximale Wert des Prozentsatzes der Sollwertinformationsänderung so bestimmt ist, daß die Istgeschwindigkeit des Bandes mit einer Geschwindigkeit nachgeregelt wird, die höchstens gleich etwa einem Prozent der Referenzgeschwindigkeit ist.

8. Regelvorrichtung nach einem der Ansprüche 3 bis 7, dadurch gekennzeichnet, daß die Sollwertinformation gegebenenfalls in Abhängigkeit von der Fehlerinformation um eine Größe verändert wird, deren Absolutwert ein vorbestimmter fester Wert ist.

9. Regelvorrichtung nach einem der Ansprüche 3 bis 8, bei welcher das zweite Meßsignal einer Frequenz (fb) aufweist, die mit der Ist-Vorbeilaufgeschwindigkeit des Bandes in Beziehung steht, während das Pilotsignal (fp) eine Frequenz aufweist, die in der gleichen Weise mit der Referenzgeschwindigkeit in Beziehung steht, dadurch gekennzeichnet, daß die Vergleichermittel eine Fehlerinformation abgeben, welche die zeitliche Veränderung der Phasenverschiebung (PH) zwischen dem Meßsignal und dem Pilotsignal darstellt.

10. Regelvorrichtung nach einem der Ansprüche 3 bis 9, bei welcher die Vergleichermittel und die Korrekturmittel durch eine digitale Verarbeitungseinheit gebildet sind.

**Claims**

1. A servo device for controlling the rotation speed of an electric motor which comprises a supply circuit (18) for supplying the electric motor with electric power, a sensor (21) providing a measurement signal (avm) representative of the actual rotation speed of the motor (vm) and a control circuit (20) which receives the measurement signal (svm) and delivers a control signal (EN) to the supply circuit for adjusting the motor's rotation speed to a predetermined reference value (VM), wherein said control signal is a function of the number of pulses delivered by a clock during time periods which are inversely proportional to the actual motor speed, this servo device being characterized in that the control circuit comprises:

— a function generator (25) receiving the measurement signal and generating a control value EN according to the function EN=CN+f (vm), where f (vm) is a function of the actual rotation speed vm of the motor and CN is a presetting value previously stored into a memory, and

— computer means (24) providing at their output an updated value of the stored CN value, these means being connected to the output of the function generator and arranged to compute CN=EN−f (VM). where EN is the previously generated control value and VM is the reference value for the motor's rotation speed, wherein said function generator (25) essentially comprises a preloaded counter (27) whose preloading input is connected to the output of said computer means (24), whose counting input is connected to the output of said clock (26) and whose counting control input receives counting control signals produced from the measurement signal (svm) whose frequency is proportional to the actual motor speed.

2. A servo device according to claim 1, wherein the contents of the counter are transferred into a memory (28) under the control of storing signals generated from the measurement signal.

3. A servo device according to any of claims 1 to 2, wherein said electric motor drives a tape and said device comprises a sensor (31) providing a second measurement signal (svb) representing the actual instantaneous tape speed, a servo control loop (30) receiving the second measurement signal (svb) and a pilot signal (svp), and providing said control circuit (20) with a reference information (IC) in order to drive the tape at a reference speed represented by the pilot signal (svp), characterized in that the servo control loop (30) comprises: comparator means (36, 37) which receive the measurement signal and the pilot signal and provide an error information (IE) representative of the deviation between the actual and reference tape speeds, and corrector means (38) which modify the reference information (IC) according to the error information, wherein the change rate of the reference information has a limited maximum absolute value.

4. A servo device according to claim 3, characterized in that the reference information is intermittently modified, if necessary, according to the error information, by a quantity ($\Delta ICn$) not exceeding in absolute value a predetermined maximum value.

5. A servo device according to any of claims 3 and 4, characterized in that the corrector means modify the reference information only according to the signal of the error information (IE).

6. A servo device according to any claims 3 and 4, characterized in that the corrector means modify the reference information according to the signal and absolute value of the error information.

7. A servo device according to any claims 3 to 6, wherein the maximum value of the variation rate of the reference information is determined so that the actual tape speed is corrected at a speed at most equal to about 1% of the reference speed.

8. A servo device according to any of claims 3 to 7, characterized in that the reference information is modified, if necessary, according to the error information, by an amount having a fixed predetermined absolute value.

9. A servo device according to any of claims 3 to 8, wherein the second measurement signal has a frequency (fb) which is related to the actual tape speed and the pilot signal (fp) has a frequency which is related in the same way to the reference speed, characterized in that the comparator means generate an error information representing the time variation of the phase-shift (PH) between the measurement signal and the pilot signal.

10. A servo device according to any of claims 3 to 9, wherein the comparator means and the corrector means comprise a digital processing unit.

Fig. 1

0 020 211

Fig. 2

**Fig. 5**

ITP → $0 \longrightarrow [PH_n]$ → RETOUR

**Fig. 6**

ITI → $PH+1 \longrightarrow [PH_n]$ → RETOUR

**Fig. 4**

ITM → LECTURE EN → LECTURE IC → CALCUL EN_IC_CN → SORTIE CN → RETOUR

**Fig. 3**

ITB → LECTURE PHn → LECTURE PHn-1 → PHn :: PHn-1

$> \quad +\Delta IC \xrightarrow{max} [\Delta IC]$

$= \quad 0 \longrightarrow [\Delta IC]$

$< \quad -\Delta IC \xrightarrow{max} [\Delta IC]$

→ LECTURE IC → CALCUL IC+ΔIC=IC → RANGEMENT IC → $PH_n [PH_{n-1}]$ → RETOUR

3